# EUROPÄISCHE PATENTSCHRIFT

(11) **EP 1 278 649 B1**
(45) Veröffentlichungstag und Bekanntmachung des Hinweises auf die Patenterteilung: **07.02.2007**
(21) Anmeldenummer: 01940194.2
(22) Anmeldetag: 26.04.2001
(51) Int. Cl.: B60K 37/00, B60R 16/02

(54) **ABDECKVORRICHTUNG FÜR LEITUNGEN IN FAHRZEUGEN**
COVER DEVICE FOR LINES IN VEHICLES
DISPOSITIF DE COUVERTURE POUR CONDUITES SE TROUVANT DANS DES VEHICULES

(30) Priorität: 28.04.2000 DE 10021064
(43) Veröffentlichungstag der Anmeldung: 29.01.2003
(73) Patentinhaber: ROBERT BOSCH GMBH, 70442 Stuttgart (DE)
(72) Erfinder: PREISSL, Reinhold, 70439 Stuttgart (DE); BURKHARDT, Volker, 73525 Schwaebisch Gmuend (DE); KARAMPATZIAKIS, Kiriakos, 70469 Stuttgart (DE); UHL, Heribert, 71263 Weil Der Stadt (DE); WINITZKI, Klaus, 75196 Remchingen (DE); GLAS, Hermann, 71522 Backnang (DE); AUER, Rupert, 87656 Germaringen (DE)
(86) Internationale Anmeldenummer: PCT/DE2001/001584
(87) Internationale Veröffentlichungsnummer: WO 2001/083254

(56) Entgegenhaltungen:
- EP-A- 0 904 986
- DE-A- 3 534 653
- US-A- 5 705 104
- US-A- 5 754 398

## Beschreibung

### Stand der Technik

Die Erfindung geht aus von einer Abdeckvorrichtung in einem Fahrzeug nach der Gattung des Hauptanspruchs. Es ist schon bekannt, Versorgungsleitungen, insbesondere elektrische Leitungen, von einem Benutzer eines Fahrzeugs durch geeignete Abdeckungen abzuschirmen. In Kraftfahrzeugen wird hierzu ein im allgemeinen aus einem Kunststoffmaterial gefertigtes Cockpitmodul in einen Bereich vor dem Fahrer und dem Beifahrer eingesetzt. Dieses Cockpitmodul weist eine Durchführung für die Lenksäule auf. Ferner sind elektrische Bauteile, wie z. B. ein Anzeigeinstrument, ein Radio oder ein Navigationssystem in Öffnungen oder in durch das Cockpitmodul gebildete Schächte einsetzbar. Auf der einem Benutzer abgewandten Seite des Cockpitmoduls werden die einzelnen Geräte an eine Stromversorgung und an Datenleitungen angeschlossen. Vorzugsweise werden diese Leitungen in einem Kabelbaum gebündelt, der in den Motorraum des Fahrzeugs geführt wird. Elektrische Schaltkreise sind hierbei auf der einem Benutzer des Fahrzeugs abgewandten Seite der als Cockpitmodul ausgeführten Abdeckvorrichtung angeordnet. Die elektrischen Schaltkreise und die Kabel werden bei der Fertigung in das Cockpitmodul in zahlreichen Montageschritten eingebracht. Weiterhin ist es bekannt, elektrische Leitungen nicht lose hinter der Abdeckvorrichtung anzuordnen, sondern auf der Rückseite des Cockpitmoduls zu montieren.

DE-A-3 534 653 zeigt eine Abdeckvorrichtung mit den Merkmalen des Oberbegriffs des unabhängigen Anspruchs.

### Vorteile der Erfindung

Die erfindungsgemäße Abdeckvorrichtung mit den Merkmalen des Hauptanspruchs hat demgegenüber den Vorteil, dass elektrische Verbindungsleitungen zu in der Abdeckvorrichtung angeordneten elektrischen Komponenten bei der Herstellung der Abdeckvorrichtung direkt integriert werden können. Hierdurch können zahlreiche lose Kabelverbindungen wegfallen, für die ein hoher Platzaufwand und Befestigungselemente hinter der Abdeckvorrichtung erforderlich sind. Weiterhin werden hierdurch die für die Montage der Kabelverbindungen erforderlichen Montageschritte eingespart. Als weiterer Vorteil ist anzusehen, dass durch die Schichten der Abdeckvorrichtung die Folienleiterbahnen gegenüber einer losen Kabelführung besser gegen Korrosion und Kabelbruch geschützt sind. Weiterhin ist es vorteilhaft, dass elektrische Anschlüsse an die Abdeckvorrichtung nicht an dem durch das Design der Abdeckvorrichtung vorgegebenen Stellen liegen müssen, sondern dass diese Anschlüsse z. B. an einer zentralen Stelle der Abdeckvorrichtung erfolgen können. Hierdurch kann die Montage von Anschlußkabeln vereinfacht werden, insbesondere dadurch, dass solche Anschlüsse nun an einer gut zugänglichen Stelle der Abdeckvorrichtung angeordnet werden. Durch den Wegfall von Kabeln kann ferner das Gewicht des Fahrzeugs reduziert und damit der Spritverbrauch gesenkt werden. Außerdem kann die Anzahl von anzubringenden Steckern reduziert werden

Durch die in den Unteransprüchen aufgeführten Maßnahmen sind vorteilhafte Weiterbildungen und Verbesserungen der im Hauptanspruch angegebenen Abdeckvorrichtung möglich. Besonders vorteilhaft ist es, in einer ersten Schicht der Abdeckvorrichtung Ausnehmungen für eine Leiterplatte vorzusehen. In diesen Ausnehmungen können je nach Ausstattung des Fahrzeugs verschiedene Leiterplatten während der Montage angeordnet werden. Zusätzliche Halterungen für Leiterplatten sind nicht erforderlich.

Weiterhin ist es vorteilhaft, dass elektrische Bauelemente an den Folienleiterbahnen elektrisch kontaktierend angeordnet sind. Hierdurch kann die Montage von Leiterplatten zumindest teilweise entfallen.

Es ist ferner vorteilhaft, zwischen den Schichten der Abdeckvorrichtung einen Schalter vorzusehen, der vorzugsweise von einem Fahrzeuginnenraum bedienbar ist. Hierdurch ist für die Anordnung von Bedienelementen zu dem Fahrzeuginnenraum keine zusätzliche Öffnung der Abdeckvorrichtung erforderlich, so dass der Schalter ohne Zwischenräume, in die z.B. Schmutz gelangen kann, bündig mit der Oberfläche der Abdeckvorrichtung abschließt.

Besonders vorteilhaft ist es, ein Cockpitmodul in einem Fahrzeug mit einer erfindungsgemäßen Abdeckvorrichtung auszustatten, da insbesondere in einem solchen Cockpitmodul eine Vielzahl von elektrischen Leitungen und Leiterplatten angeordnet werden muss.

### Zeichnungen

Ausführungsbeispiele der Erfindung sind in der Zeichnung dargestellt und in der nachfolgenden Beschreibung näher erläutert. Es zeigen Figur 1 einen Ausschnitt aus einer erfindungsgemäßen Abdeckvorrichtung mit einer an der Abdeckvorrichtung angeordneten Leiterplatte, Figur 2a eine Folienleiterbahn mit Kontaktflächen für einen elektrischen Kontakt zu einer Leiterplatte, Figur 2b eine Folienleiterbahn in einem elektrischen Kontakt zu einer Leiterplatte in einer Seitenansicht, Figur 3a einen Ausschnitt aus einer erfindungsgemäßen Abdeckvorrichtung mit einem Schalter und einer Lichtquelle, Figur 3b den Ausschnitt aus der erfindungsgemäßen Abdeckvorrichtung der Figur 3a in einer Seitenansicht, Figur 4a eine Ansicht eines erfindungsgemäßen Cockpitmoduls mit einer Abdeckvorrichtung in einem Kraftfahrzeug, Figur 4b einen Schnitt durch die erfindungsgemäße Cockpitvorrichtung in einer Seitenansicht, Figur 5 eine Anordnung von Leiterplatten, Bedien- und Anzeigeelementen in einem erfindungsgemäßen Cockpitmodul.

### Beschreibung des Ausführungsbeispiels

Die erfindungsgemäße Abdeckvorrichtung kann in einer Vielzahl von Fahrzeugen verwendet werden, z. B. Kraftfahrzeugen, Flugzeugen oder Schienenfahrzeugen. Eine Verwendung ist hierbei im Bedienbereich oder in einem Passagierbereich bzw. Frachtbereich des jeweiligen Fahrzeugs möglich. Das Ausführungsbeispiel wird hier anhand der Verwendung in einem Kraftfahrzeug beschrieben. Die Abdeckvorrichtung kann in einem Kraftfahrzeug einerseits für eine Verwendung in einem Cockpitmodul, andererseits jedoch auch für die Abdeckung von Seitenflächen bzw. Fahrzeugtüren gegenüber dem Fahrzeuginneren verwendet werden, in denen z.B. bei der Anordnung von elektrischen Fensterhebern oder von Steuerungselementen z.B. für einen elektrischen Außenspiegel oder eine Klimasteuerung ebenfalls elektrische Leitungen verlaufen. Die erfindungsgemäße Abdeckvorrichtung wird anhand eines Ausführungsbeispiels eines Cockpitmoduls bzw. anhand von Ausschnitten aus einem Cockpitmodul erläutert.

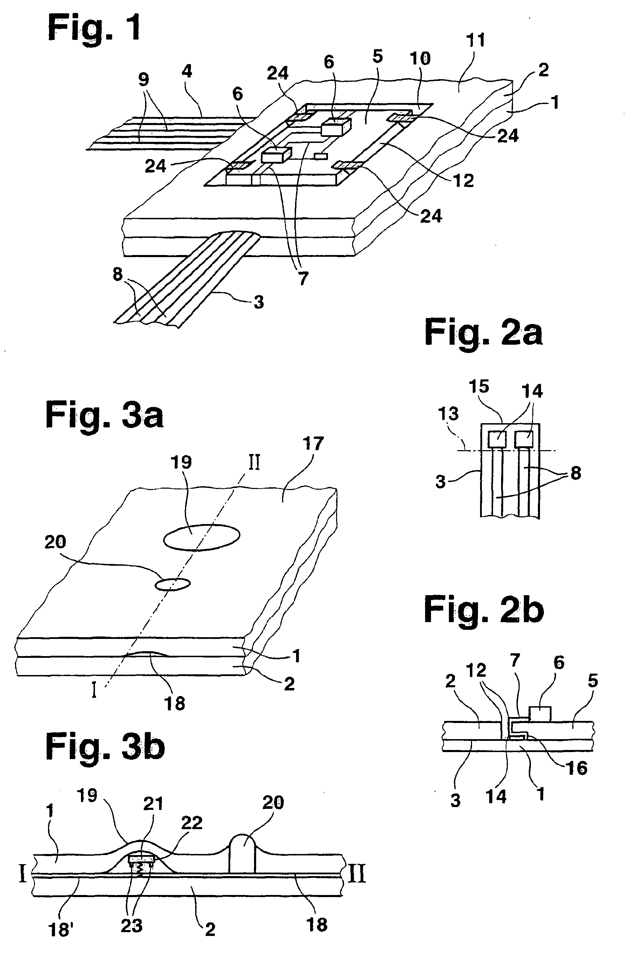

In der Figur 1 ist ein Ausschnitt aus einer erfindungsgemäßen Abdeckvorrichtung dargestellt. Die Abdeckvorrichtung weist eine erste Schicht 1 und eine zweite Schicht 2 auf. Zwischen der ersten Schicht 1 und der zweiten Schicht 2 sind eine erste Folienleiterbahn 3 und eine zweite Folienleiterbahn 4 angeordnet. Die erste Folienleiterbahn 3 und die zweite Folienleiterbahn 4 sind in der Figur 1 zu einer besseren Veranschaulichung aus dem begrenzt dargestellten Bereich der ersten Schicht 1 herausragend dargestellt, so dass die Folienleiterbahnen 3, 4, die zwischen der ersten und der zweiten Schicht eingeschlossen sind, erkennbar werden. Die erste Folienleiterbahn 3 und die zweite Folienleiterbahn 4 führen zu einer Leiterplatte 5. Die Leiterplatte 5 trägt Bauelemente 6 und Leiterbahnen 7, mittels derer die Bauelemente 6 zumindest teilweise miteinander bzw. mit der ersten und/oder der zweiten Folienleiterbahn 3, 4 verbunden sind. Die Leiterbahnen 7 sind hierbei mit auf den Folienleiterbahnen 3, 4 angeordneten Leiterbahnen 8, 9 verbunden. Die Leiterplatte 5 ist in einer Ausnehmung 10 der zweiten Schicht 2 angeordnet. Die Ausnehmung 10 ist in einer Oberfläche 11 der zweiten Schicht 2 vorzugsweise so angeordnet, dass sich die Leiterplatte 5 mit den elektrischen Bauelementen 6 nicht oder nur wenig über die zweite Schicht 2 erhebt. Die zweite Schicht 2 ist vorzugsweise aus einem verbiegungsbeständigen Kunststoffmaterial gefertigt, wobei durch eine Formgebung der zweiten Schicht 2 eine Form der Abdeckvorrichtung vorgegeben wird. Hierbei ist eine Formgebung der Abdeckvorrichtung nicht alleine auf die in der Figur 1 dargestellte, ebene Ausführung der zweiten Schicht 2 begrenzt. Die zweite Schicht 2 kann auch gekrümmt geformt sein, um eine Anpassung an ein gewünschtes Design der Abdeckvorrichtung zu ermöglichen, z.B. um in einem Fahrzeug eine Ablage oder ein Handschuhfach auszuformen. Die zweite Schicht 2 weist von einem Innenraum des Fahrzeugs ab, so dass die Oberfläche 11 der zweiten Schicht 2 für einen in dem Fahrzeug sitzenden Benutzer des Fahrzeugs nicht sichtbar ist. Die zweite Schicht 2 wird gegenüber dem Innenraum des Fahrzeugs von der ersten Schicht 1 bedeckt. Der Innenraum des Fahrzeugs ist dabei vorzugsweise der für Passagiere oder für Fracht vorgesehene Raum des Fahrzeugs. Die erste Schicht 1 ist vorzugsweise aus einem weichen Kunststoffmaterial gefertigt, dass vorzugsweise auf die zweite Schicht aufgeschäumt wird, wobei die Folienleiterbahnen 3, 4 an der zweiten Schicht 2 vorzugsweise bis auf herausführende Kontaktflächen eingeschlossen und hierdurch fixiert werden. Die Leiterplatte 5 ist anschließend in der Ausnehmung 10 der zweiten Schicht 2 anbringbar. Hierbei ist die Leiterplatte 5 vorzugsweise aus dem gleichen Kunststoffmaterial, aus dem auch die zweite Schicht 2 gefertigt ist. Die Leiterplatte 5 ist über die Folienleiterbahnen 3, 4 vorzugsweise mit anderen, in der Figur 1 nicht dargestellten Leiterplatten oder Steckern verbunden. Die elektrischen Bauelemente 6, die auf der Leiterplatte 5 angeordnet sind, sind vorzugsweise in SMD-Technik auf die Leiterplatte 5 aufgebracht. Die Leiterplatte 5 selbst ist ein elektrischer Schaltkreis, der z. B. zur Steuerung einer Anzeigeeinheit, zum Auslesen von Bedienelementen, zur Fahrzeugnavigation, zur Radiosteuerung und/oder zur Klimasteuerung in dem Fahrzeug dient. Die Leiterplatte 5 mit den entsprechenden elektrischen Bauelementen 6 ist nach Erstellung der zweiten Schicht 2 und der ersten Schicht 1 je nach einer gewünschten Ausführung einsetzbar, z.B. in einer den Funktionsumfang des entsprechenden Gerätes erweiternden oder beschränkenden Ausführung. Gegebenenfalls ist die Leiterplatte 5 auch austauschbar. In einem bevorzugten Ausführungsbeispiel weist hierbei die Leiterplatte zu der Oberfläche 11 der zweiten Schicht 2 einen Spalt 12 auf, der eine Temperaturausdehnung der Leiterplatte 5 ermöglicht und somit entstehende Spannungen durch thermische Ausdehnung der Leiterplatte oder der zweiten Schicht 2 verhindert. Einer Befestigung der Leiterplatte erfolgt in einem ersten Ausführungsbeispiel über eine Verbindung durch Löten oder durch Kleben mit Leitkleber. In einer anderen Ausführung ist auch eine Befestigung der Leiterplatte 5 mit Rasthaken 24 möglich, die die Leiterplatte gegen die erste Schicht 1 und auf dieser angeordnete Kontaktflächen der Folienleiterbahn halten, die in der Figur 1 nicht dargestellt sind. Die Rasthaken sind dabei vorzugsweise als federnde Rasthaken ausgestaltet, die eine einfach Montage und ein einfaches Auswechseln der Leiterplatte 5 ermöglichen, und an die zweite Schicht 2 angeformt. Ferner ist es jedoch auch möglich, die Leiterplatte 5 passgenau in die Ausnehmung 10 einzusetzen. In einem weiteren, in der Figur 1 nicht gezeigten Ausführungsbeispiel ist es auch möglich, die elektrischen Bauelemente 6 direkt auf der Oberfläche 11 der zweiten Schicht 2 anzuordnen und einen elektrischen Kontakt durch die zweite Schicht 2 hindurch zu den Folienleiterbahnen 3, 4 zu erstellen, z.B. durch eine Bohrung oder eine andere Öffnung, die durch die zweite Schicht 2 führt.

In der Figur 2a ist die erste Folienleiterbahn 3 mit den Leiterbahnen 8 dargestellt. Hier und im Folgenden bezeichnen gleiche Bezugszeichen auch gleiche Elemente. Die gestrichelte Linie 13 markiert einen Rand der Oberfläche 11 der zweiten Schicht 2. Ein Bereich 15 der ersten Folienleiterbahn 3 ragt in die in der Figur 1 gezeigte Ausnehmung 10 hinein. In dem Bereich 15 sind Kontaktflächen 14 der Leiterbahnen 8 auf der ersten Folienleiterbahn 3 angeordnet. Die erste Folienleiterbahn 3 ist dabei in einem bevorzugten Ausführungsbeispiel in der Weise ausgeführt, dass die Leiterbahnen 8 in eine flexible Kunststoffschicht eingegossen sind und durch die flexible Kunststoffschicht von der Umgebung elektrisch isoliert sind. An den Kontaktflächen 14 sind die Leiterbahnen 8 frei von einer Isolierung. In der Figur 2b ist der Bereich der Kontaktierung der Leiterplatte 5 zu der ersten Folienleiterbahn 3 in einer Seitenansicht dargestellt. Ein Kontakt 16 wird zwischen einer Leiterbahn 7 und einer Kontaktfläche 14 einer Leiterbahn 8 der ersten Folienleiterbahn 3 erstellt. In einem bevorzugten Ausführungsbeispiel erfolgt diese Verbindung mittels SMD-Löttechnik. Ferner ist der Kontakt 16 auch mittels Leitkleber herstellbar. In einem bevorzugten Ausführungsbeispiel wird der Kontakt 16 über ein sogenanntes Ball-Grid-Array erstellt, wobei kleine Kugeln aus einer leicht schmelzbaren Metallegierung auf die Kontaktflächen 14 aufgebracht werden und durch Erhitzen mit der Leiterplatte 5 und den an der Leiterplatte angeordneten Leiterbahnen 7 kontaktiert werden. Ferner kann der Kontakt auch über Federkontakte erfolgen, bei denen die Leiterbahnen 7 der Leiterplatte 5 in Kontaktfedern enden, die gegen die Kontaktflächen 14 der ersten Folienleiterbahn 3 drücken. Ferner ist eine Ausführung mit Steckkontakten möglich, bei der an der Folienleiterbahn und an der Leiterplatte 5 Steckkontakte angeordnet sind.

In der Figur 3a ist ein anderer Ausschnitt aus einer erfindungsgemäßen Abdeckvorrichtung dargestellt. Auf einer Oberfläche 17 der ersten Schicht 1 ist eine Erhebung 19 mit einem in der Erhebung 19 befindlichen und in der Darstellung der Figur 3a nicht sichtbaren Schalter angeordnet. Neben der Erhebung 19 ist eine Lichtquelle 20 angeordnet. Über eine Folienleiterbahn 18, 18' ist der unter der Erhebung 19 angeordnete Schalter und die Lichtquelle 20 mit einer in der Figur 3a nicht gezeigten Stromversorgung und mit einer elektrischen Ansteuerung verbunden. Vorzugsweise ist die Erhebung 19 eingefärbt, so dass ein Benutzer eine besondere Funktionen der Erhebung 19 erkennen kann. In der Figur 3b ist ein Schnitt in einer Seitenansicht entlang der Linie von I nach II in der Figur 3a dargestellt. Unter der Erhebung 19 ist ein Schalter als ein Folienschalter ausgeführt, in dem ein Tastelement 21 gegen die Spannung einer Feder 22 durch einen Druck auf die Erhebung 19 bewegbar ist und hierbei ein Kontakt zwischen zwei unterbrochenen Leiterbahnabschnitten 18 und 18' der Folienleiterbahn durch elektrisch miteinander verbundene Kontakte 23 des Tastelements 21 schließbar ist. In einem weiteren, in der Figur 3b nicht gezeigten Ausführungsbeispiel kann der Schalter auch als ein vorzugsweise kapazitiver Schalter ausgeführt sein, der auf eine Annäherung eines Fingers an die Erhebung 19 reagiert. Der aus dem Tastelement 21, in der Feder 22 und den elektrischen Kontakten 23 bestehende Schalter ist durch die erste Schicht 1 von dem Fahrzeuginnenraum vollständig abgeschirmt. Neben dem Schalter ist eine Lichtquelle 20, vorzugsweise eine Leuchtdiode oder eine Glühlampe, die erste Schicht 1 durchstoßend angeordnet. Die Lichtquelle 20 ist direkt auf die Folienleiterbahn 18 kontaktiert und wird von der Folienleiterbahn 18 über entsprechende, in der Folienleiterbahn 18 angeordnete Leiterbahnen ausgehend von einer in der Figur nicht gezeigten Spannungsquelle mit einer Betriebsspannung versorgt.

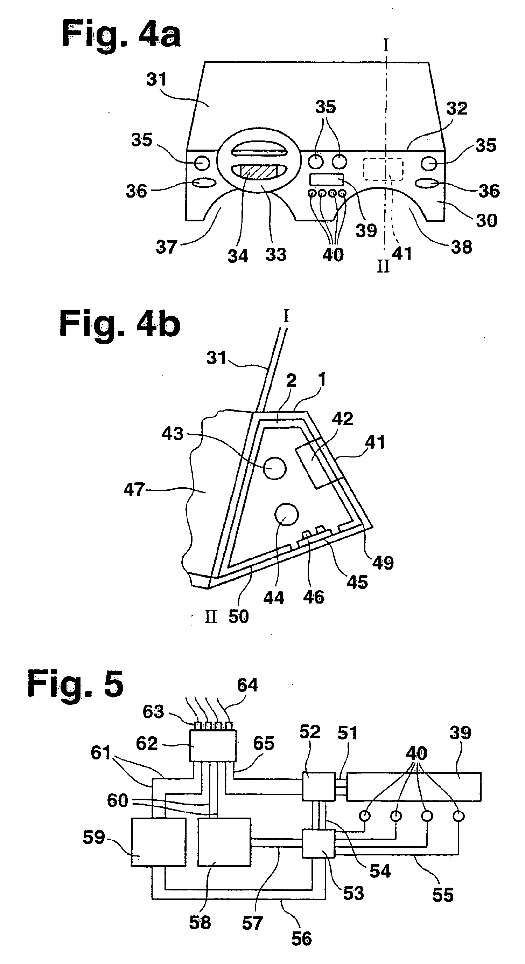

In der Figur 4a ist eine Ansicht auf ein Cockpitmodul 30 in einem Kraftfahrzeug dargestellt. Das Cockpitmodul 30 weist eine Abdeckvorrichtung mit einer ersten Schicht und einer zweiten Schicht und dazwischen angeordneten Folienleiterbahnen auf. Das Cockpitmodul 30 schließt an einen unteren Rand 32 einer Windschutzscheibe 31 an. Das Cockpitmodul wird ferner von einer an einem Lenkrad 33 angeordneten, in der Figur 4a nicht gezeigten Lenksäule durchstoßen. Im Bereich des Lenkrades 33 ist vor einem Fahrer ein Anzeigeinstrument 34 angeordnet, vorzugsweise zumindest zum Anzeigen einer Fahrzeuggeschwindigkeit. Ferner sind in dem Cockpitmodul 30 Auslaßdüsen 35 für eine Lüftung und/oder Klimaanlage angeordnet. Ferner sind Ablagefächer 36 in dem Cockpitmodul 30 angeordnet. Das Cockpitmodul 30 umschließt einen Fußraum 37 eines Fahrers und einen Fußraum 38 eines Beifahrers. Zwischen dem Fußraum 37 des Fahrers und dem Fußraum 38 des Beifahrers ist im Bereich einer Mittelkonsole eine Anzeigeeinheit 39 mit Bedienelementen 40 angeordnet. Auf der dem Beifahrer abgewandten Seite der ersten Schicht 1 ist hinter einem ablösbaren, in der Figur gestrichelt eingezeichneten Bereich 41 der ersten Schicht 1 eine Airbag-Vorrichtung 42 für einen Beifahrer angeordnet.

Das Cockpitmodul 30 schützt den Fahrer und den Beifahrer vor hinter der erfindungsgemäß ausgeführten Abdeckvorrichtung des Cockpitmoduls 30 angeordneten Versorgungsleitungen. Elektrische Elemente, z.B. die Anzeigeeinheit 39, das Anzeigeinstrument 34 und die Bedienelemente 40 sind über Folienleiterbahnen verbunden, die zwischen einer ersten Schicht 1 und einer zweiten Schicht 2 des Cockpitmoduls 30 angeordnet sind. In der Figur 4b ist ein Schnitt durch das Cockpitmodul 30 entlang der gestrichelten Linie von I nach II in der Figur 4a dargestellt. In dem Cockpitmodul 30 ist eine Airbag-Vorrichtung 42, eine Luftversorgungsleitung 43 und ein Trageelement 44 angeordnet. Zur Steuerung der Airbag-Vorrrichtung ist eine Leiterplatte 45 mit Bauelementen 46 auf der dem Beifahrer abgewandten Seite der ersten Schicht 1 angeordnet und über eine Folienleiterbahn 49 mit der Airbag-Vorrichtung 42 verbunden. Über eine Folienleiterbahn 50 ist die Leiterplatte 45 mit einer elektrischen Spannung aus einem Motorraum 47 versorgbar, vorzugsweise von einer in der Figur nicht gezeigten Fahrzeugbatterie. Die Luftversorgungsleitung 43 führt zu einer Auslassdüse 35. Das Trageelement 44 stabilisiert die Fahrzeugkarosserie.

In der Figur 5 ist ein Ausführungsbeispiel für eine Schaltung von Leiterplatten in dem Cockpitmodul 30 gegeben. Die Anzeigeeinheit 39 durchstößt die erste Schicht 1 und ist für einen Benutzer ablesbar. Die übrigen in der Figur 5 gezeigten Elemente sind alle für einen Benutzer im Fahrzeuginnenraum nicht sichtbar. Über Folienleiterbahnen 51 ist die Anzeigeeinheit 39 mit einer Ansteuerungseinheit 52 der Anzeigeeinheit 39 verbunden. Die Ansteuerungseinheit 52 ist mit einer Ein- und Ausgabeeinheit 53 über Folienleiterbahnen 54 verbunden, wobei die Ein- und Ausgabeeinheit 53 eine Betätigung der Bedienelemente 40 auswertet, mit denen die Ein- und Ausgabeeinheit 53 über Folienleiterbahnen 55 verbunden ist. Die Bedienelemente 40 sind vorzugsweise gemäß dem zu der Figur 3a beschriebenen Schalter als eine Erhebung 19 über der ersten Schicht 1 ausgeführt. Über Folienleiterbahnen 56, 57 ist die Ein- und Ausgabeeinheit 53 mit einer Autoradiovorrichtung 58 und einer Navigationsvorrichtung 59 verbunden. Die Autoradiovorrichtung 58 steuert ein in der Figur 5 nicht weiter ausgeführtes Autoradio. Die Navigationsvorrichtung 59 ermittelt nach Eingaben durch einen Benutzer eine optimale Fahrtroute von einem Start zu einem Fahrziel. Hierzu benötigt die Navigationsvorrichtung 59 Positions- und Kartendaten. Die Autoradiovorrichtung 58 benötigt ein Antenneneingangssignal. Über Folienleiterbahnen 60, 61 werden hierbei Daten für die Navigationsvorrichtung 59 und die Autoradiovorrichtung 58 von einer zentralen Steckervorrichtung 62 des Cockpitmoduls 30 an die Navigationsvorrichtung 59 und die Autoradiovorrichtung 58 geleitet. An die zentrale Steckervorrichtung 62 sind mit einzelnen Steckeranschlüssen 63 jeweils Kabel 64 angeordnet, die einerseits mit der Stromversorgung, z.B. der Fahrzeugbatterie, verbunden sind und andererseits der Zuführung von Daten dienen, z.B. von Daten einer GPS-Einheit (GPS = Global Positioning System) für eine Positionsbestimmung, von Daten aus einer zentralen Speichereinheit, in der eine digitale Straßenkarte für eine Fahrzeugnavigation abgelegt ist und/oder von Daten für den Radioempfang von einer Antennenvorrichtung. Die zentrale Steckervorrichtung 62 ist insbesondere zur Stromversorgung über Folienleiterbahnen 65 mit der Ansteuerungseinheit 52 für die Anzeigeeinheit 39 verbunden. Eine Ausgabe von Anzeigedaten der Autoradiovorrichtung 58, z.B. des eingestellten Senders, oder der Navigationsvorrichtung, z.B. von Fahrhinweisen, erfolgt über die Ein- und Ausgabeeinheit 53, die die entsprechenden Ausgaben an die Ansteuerungseinheit 52 der Anzeigeeinheit 39 weiterleitet, in der die Ausgaben angezeigt werden. Die Bedienelemente 40 dienen dabei insbesondere einer Menüauswahl aus einer Vielzahl von in der Anzeigeeinheit 39 angebotenen Befehlen und/oder Informationen. Sowohl die Autoradiovorrichtung 58, die Navigationsvorrichtung 59, die Ansteuerungseinheit 52 als auch die Ein- und Ausgabeeinheit 53 sind vorzugsweise auf Leiterplatten ausgeführt, die an einer beliebigen Stelle in dem Cockpitmodul 30 angeordnet sein können. Die zentrale Steckervorrichtung 62 ist vorzugsweise an eine Stelle im Fahrzeug angeordnet, die gut zugänglich ist, so dass bei einem Austausch z.B. der Fahrzeugantenne für den Radioempfang, durch einfaches Lösen eines entsprechenden Steckers der Steckeranschlüsse 63 das entsprechende Bauteil, also z.B. der Fahrzeugantenne, ausgetauscht werden kann.

## Patentansprüche

1. Abdeckvorrichtung für ein Fahrzeug, wobei durch die Abdeckvorrichtung Versorgungsleitungen und/oder elektrische Schaltungen abgedeckt sind, und wobei die Abdeckvorrichtung (30) eine erste Schicht (1) und eine zweite Schicht (2) aufweist, **dadurch gekennzeichnet, dass** eine Folienleiterbahn (3, 4, 18, 18') zwischen der ersten Schicht (1) und der zweiten Schicht (2) angeordnet ist, dass an der ersten Schicht (1) eine Leiterplatte (5) in einer Ausnehmung (10) der zweiten Schicht (2) befestigt ist und dass an der Leiterplatte (5) elektrische Bauelemente (6) angeordnet sind.

2. Abdeckvorrichtung nach Anspruch 1, **dadurch gekennzeichnet, dass** die Leiterplatte mit Rasthaken (24) in der Ausnehmung (10) befestigbar ist.

3. Abdeckvorrichtung nach einem der vorhergehenden Ansprüche, **dadurch gekennzeichnet, dass** Leiterbahnen (7) auf der Leiterplatte (5) mit Kontakten (14) einer Folienleiterbahn (3, 4) vorzugsweise mittels Ball-Grid-Array-Technik oder mittels SMD-Technik oder mittels Leitkleber verbunden sind.

4. Abdeckvorrichtung nach einem der vorhergehenden Ansprüche, **dadurch gekennzeichnet, dass** elektrische Bauelemente (6, 20, 21) an den Folienleiterbahnen (18, 18') elektrisch kontaktierend angeordnet sind.

5. Abdeckvorrichtung nach einem der vorhergehenden Ansprüche, **dadurch gekennzeichnet, dass** zwischen der ersten Schicht (1) und der zweiten Schicht (2) ein elektrischer Schalter (21, 22) angeordnet ist, dass der Schalter (21, 22) mit einer Folienleiterbahn (18, 18') verbunden ist und dass der Schalter (21, 22) durch die erste (1) oder durch die zweite Schicht (2) hindurch auslösbar ist.

6. Abdeckvorrichtung nach einem der vorhergehenden Ansprüche, **dadurch gekennzeichnet, dass** die zweite Schicht (2) von einem Fahrzeuginnenraum abweist, dass die zweite Schicht (2) aus einem weitgehend unflexiblen Kunststoffmaterial gefertigt ist, dass die erste Schicht (1) dem Fahrzeuginnenraum zuweist, dass die erste Schicht (1) aus einem weichen Kunststoffmaterial gefertigt ist und dass die zweite Schicht (2) die Abdeckvorrichtung (30) trägt.

7. Abdeckvorrichtung nach einem der vorhergehenden Ansprüche, **dadurch gekennzeichnet, dass** die Folienieiterbahnen (3, 4) durch Umschäumen mit einem Kunststoffmaterial zwischen der ersten und der zweiten Schicht fixierbar sind.

8. Cockpitmodul in einem Fahrzeug, wobei in dem Cockpitmodul elektrische Leitungen angeordnet sind und wobei die elektrischen Leitungen durch das Cockpitmodul gegenüber einem Fahrzeuginnenraum abgedeckt sind **dadurch gekennzeichnet, dass** das Cockpitmodul (30) als eine Abdeckvorrichtung nach einem der vorhergehenden Ansprüche ausgeführt ist. zweite Schicht (2) hindurch auslösbar ist.

9. Cockpitmodul nach Anspruch 8, **dadurch gekennzeichnet, dass** eine Vielzahl von Leiterplatten (52, 53, 58, 59) über eine oder mehrere zwischen der ersten und der zweiten Schicht angeordnete Folienleiterbahnen (55, 56, 57, 60, 61, 65) verbunden sind.

10. Cockpitmodul nach einem der Ansprüche 8-9, **dadurch gekennzeichnet, dass** an dem Cockpitmodul (30) elektrische Anschlüsse (63) an die Folienleiterbahnen (60, 61, 65) angeordnet sind.

## Claims

1. Cover device for a vehicle, with the cover device (30) covering supply lines and/or electrical circuits and having a first layer (1) and a second layer (2), **characterized in that** a film-type conductor track (3, 4, 18, 18') is arranged between the first layer (1) and the second layer (2), **in that** a printed circuit board (5) in a recess (10) in the second layer (2) is secured to the first layer (1), and **in that** electrical components (6) are arranged on the printed circuit board (5).

2. Cover device according to Claim 1, **characterized in that** the printed circuit board can be secured in the recess (10) using latching hooks (24).

3. Cover device according to one of the preceding claims, **characterized in that** conductor tracks (7) on the printed circuit board (5) are connected to contacts (14) of a film-type conductor track (3, 4), preferably by means of ball grid array technology or by means of SMD technology or by means of conductive adhesives.

4. Cover device according to one of the preceding claims, **characterized in that** electrical components (6, 20, 21) are arranged on the film-type conductor tracks (18, 18') such that they make electrical contact.

5. Cover device according to one of the preceding claims, **characterized in that** an electrical switch (21, 22) is arranged between the first layer (1) and the second layer (2), **in that** the switch (21, 22) is connected to a film-type conductor track (18, 18'), and **in that** the switch (21, 22) can be triggered through the first (1) or through the second layer (2).

6. Cover device according to one of the preceding claims, **characterized in that** the second layer (2) faces away from a vehicle interior, **in that** the second layer (2) is made from a largely inflexible plastic material, **in that** the first layer (1) faces the vehicle interior, **in that** the first layer (1) is made from a soft plastic material, and **in that** the second layer (2) supports the cover device (30).

7. Cover device according to one of the preceding claims, **characterized in that** the film-type conductor tracks (3, 4) can be fixed between the first and the second layer by being encapsulated with a foamed plastic material.

8. Cockpit module in a vehicle, with electrical lines being arranged in the cockpit module, and with the electrical lines being covered with respect to a vehicle interior by the cockpit module, **characterized in that** the cockpit module (30) is in the form of a cover device according to one of the preceding claims.

9. Cockpit module according to Claim 8, **characterized in that** a multiplicity of printed circuit boards (52, 53, 58, 59) are connected by means of one or more film-type conductor tracks (55, 56, 57, 60, 61, 65) which are arranged between the first and second layers.

10. Cockpit module according to either of Claims 8 and 9, **characterized in that** electrical connections (63) to the film-type conductor tracks (60, 61, 65) are arranged on the cockpit module (30).

## Revendications

1. Dispositif de recouvrement (30) pour un véhicule, ce dispositif recouvrant des conduites d'alimentation et/ou des circuits électriques et présentant une première couche (1) et une deuxième couche (2),
**caractérisé en ce qu'**
une bande de film conducteur (3, 4, 18, 18') est disposée entre la première couche (1) et la deuxième couche (2), un circuit imprimé (5) est fixé sur la première couche (1) dans un évidement (10) de la deuxième couche (2) et des composants électriques (6) sont disposés sur le circuit imprimé (5).

2. Dispositif de recouvrement selon la revendication 1,
**caractérisé en ce que**
le circuit imprimé peut être fixé dans l'évidement (10) par des crochets (24).

3. Dispositif de recouvrement selon l'une quelconque des revendications précédentes,
**caractérisé en ce que**
sur le circuit imprimé (5), les bandes conductrices (7) sont reliées par les contacts (14) d'une bande de film conducteur (3, 4), de préférence selon la technique de connexion d'un circuit utilisant un boîtier comprenant des billes disposées sur une matrice (Ball-Grid-Array) ou la technique SMD ou avec des colles conductrices.

4. Dispositif de recouvrement selon l'une quelconque des revendications précédentes,
**caractérisé en ce que**
des composants électriques (6, 20, 21) sont disposés sur les bandes de film conducteur (18, 18') de manière à être en contact électrique.

5. Dispositif de recouvrement selon l'une quelconque des revendications précédentes,
**caractérisé en ce qu'**
entre la première couche (1) et la deuxième couche (2), il y a un commutateur électrique (21, 22), **en ce que** le commutateur (21, 22) est relié à une bande de film conducteur (18, 18') et **en ce que** le commutateur (21, 22) peut être déclenché à travers la première (1) ou la deuxième couche (2).

6. Dispositif de recouvrement selon l'une quelconque des revendications précédentes,
**caractérisé en ce que**
la deuxième couche (2), à l'opposé de l'habitacle d'un véhicule, est fabriquée dans une matière plastique largement non flexible et porte le dispositif de recouvrement (30), la première couche (1), attribuée à l'habitacle d'un véhicule est fabriquée dans une matière plastique tendre.

7. Dispositif de recouvrement selon l'une quelconque des revendications précédentes,
**caractérisé en ce que**
les bandes de film conducteur (3, 4) peuvent être fixées entre les première et deuxième couches en les entourant de mousse synthétique.

8. Module de cockpit dans un véhicule, des conduites électriques étant disposées dans ce module de cockpit et recouvertes par celui-ci par rapport à l'habitable d'un véhicule,
**caractérisé en ce que**
le module de cockpit est exécuté comme un dispositif de recouvrement (30) selon l'une quelconque des revendications précédentes.

9. Module de cockpit selon la revendication 8,
**caractérisé en ce qu'**
un grand nombre de circuits imprimés (52, 53, 58, 59) sont reliés par l'intermédiaire d'une ou plusieurs bande(s) de film conducteur (55, 56, 57, 60, 61, 65) disposées entre les première et deuxième couches.

10. Module de cockpit selon l'une quelconque des revendications 8-9,
**caractérisé en ce que**
sur le module de cockpit (30), des branchements électriques (63) sont reliés aux bandes de film conducteur (60, 61, 65).
